# EUROPÄISCHE PATENTSCHRIFT

(11) **EP 2 390 067 B1**
(45) Veröffentlichungstag und Bekanntmachung des Hinweises auf die Patenterteilung: **09.01.2013**
(21) Anmeldenummer: 11004008.6
(22) Anmeldetag: 14.05.2011
(51) Int. Cl.: B25J 15/02

(54) **Greifvorrichtung mit elektrodynamischem Stellglied**
Gripping device with electrodynamic positioning member
Dispositif de prise doté d'un élément de positionnement électrodynamique

(30) Priorität: 25.05.2010 DE 102010021422
(43) Veröffentlichungstag der Anmeldung: 30.11.2011
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- EP-A2- 0 385 193
- WO-A2-2009/131869
- DE-A1-102005 012 540
- JP-A- 11 114 865
- US-A- 4 667 998
- US-B1- 6 428 070

## Beschreibung

Die Erfindung betrifft eine Greifvorrichtung mit Greifelemente tragenden Greifelementeträgern, wobei die Greifelementeträger und mindestens ein elektrodynamisches Stellglied in einem Gehäuse gelagert sind, wobei das oder die elektrodynamischen Stellglieder über mindestens ein Getriebe auf mindestens einen beweglichen Greifelementeträger wirken, um das oder die Greifelemente zwischen einer Offen- und Schließstellung zu bewegen, wobei jedes Stellglied in beide Schubrichtungen elektrisch antreibbar ist.

Aus der DE 197 15 083 A1 ist ein mechanischer Greifer bekannt, der über einen elektrodynamischen Antrieb verfügt. Der Greifer trägt an einem rahmenförmigen Gehäuse angeformte, bereichsweise elastische Greifelemente, die über ebenfalls elastische Koppelstangen an einem Schlitten angelenkt sind. Auf dem Schlitten ist eine ebene Tauchspule angeordnet, die zwischen gehäuseseitig gelagerten Dauermagneten positioniert ist. Bei einem Bestromen der Tauchspule bewegt der Schlitten über die Koppelstangen die Greifelemente.

Aus der US 6 428 070 B1 ist eine Greifvorrichtung bekannt, bei der zwei in einem Gehäuse geradlinig geführte Greifelemente mittels eines Winkelgetriebes zwischen beliebig vielen Offen- und Geschlossenstellungen hin- und herbewegt werden können. Auf das Winkelgetriebe wirkt ein Hubmagnet oder eine doppeltwirkende Zylinder-Kolben-Einheit, deren jeweiliger Hub über ein Wegmeßsystem geregelt wird.

Die EP 0 385 193 A2 beschreibt eine Greifvorrichtung, bei der zwei Greifelemente parallel zueinander bewegt werden können. Die einzelnen Greifelemente sind jeweils in einem Parallelogrammgetriebe gelagert und geführt. Auf Letzteres wirkt zum Verstellen der Greifelemente eine doppeltwirkende Zylinder-Kolben-Einheit.

Der vorliegenden Erfindung liegt die Problemstellung zugrunde, eine Greifvorrichtung zu entwickeln, die bei großer Klemmkraft und geringem Energiebedarf einen geringen Bauraumbedarf hat. Zudem soll sie aus möglichst wenigen, unkomplizierten Einzelteilen gefertigt sein und sich bei wartungsarmer, einfacher und sicherer Handhabung reaktionsschnell und nahezu verschleißfrei öffnen und schließen lassen.

Diese Problemstellung wird mit den Merkmalen des Patentanspruchs 1 gelöst. Dazu wird der mindestens eine bewegliche Greifelementeträger in der Greif- und in der Geschlossenstellung der Greifelemente mittels Federkraft gehalten. Das Getriebe besteht mindestens aus einem halben Kniehebelgetriebe und einem nachgeordneten Hebelgetriebe. Der Kniehebel eines jeden halben Kniehebelgetriebes ist zum einen an einer mittels des Stellglieds antreibbaren Schiebekulisse und zum anderen an einer Pendelschwinge des Hebelgetriebes gelagert. Die Schiebekulisse und die den jeweiligen Greifelementeträger antreibende Pendelschwinge sind gehäuseseitig gelagert. Der an der Schiebekulisse schwenkgelagerte Kniehebel ist quer zur Hubrichtung der Schiebekulisse in einem Bereich von ± 40 Winkelgraden schwenkbar. Die Pendelschwinge ist um eine Parallele zur Hubrichtung in einem Bereich von ± 20 Winkelgraden sch wenkbar. Der Kniehebel befindet sich in der Offen- oder Schließstellung der Greifelemente stabil jenseits seiner quasistabilen Strecklage.

Die hier beschriebenen Greifvorrichtungen gehören u.a. zu den Gruppen der Parallel- und Winkelgreifer. Die einzelnen Greifvorrichtungen können hierbei mit zwei oder mehr Greifelementen ausgestattet sein. Die Mehrfachgreifer werden zur Gruppe der zentralen Greifer gezählt. Bei den vorgenannten Vorrichtungen können zum einen alle Greifelemente einer Greifvorrichtung zueinander synchron zeitgleich verfahren werden, um so ein Werkstück präzise an einen bestimmten Ort zu übernehmen oder zu übergeben. Zum anderen kann auch ein Teil der Greifelemente gegenüber dem Greifergehäuse der Vorrichtung ortsfest sein, sodass sich die anderen Greifelemente auf diesen oder diese beim Greifen zubewegen. Zwischen einem Greifelement und einem Stellglied ist dabei mindestens ein halbes Kniehebelgetriebe und ein weiteres Hebelgetriebe zwischengeschaltet.

Die dargestellten Greifvorrichtungen haben Greifelemente, die auf angetriebenen Greifelementeträgern angeordnet sind. Dadurch kann die einzelne Greifvorrichtung durch den einfachen Wechsel der Greifelemente an andere Werkstücke angepasst werden. Dennoch ist es möglich, die einzelnen Greifelementeträger und die jeweiligen Greifelemente als einteilige Bauteile zu fertigen. Die Stellglieder wirken dann direkt auf diese Greifelemente.

Das oder die die Greifelemente antreibenden elektrodynamischen Stellglieder basieren auf einem aus dem Lautsprecherbereich bekannten Tauchspulenprinzip. Eine bestrombare Tauchspule eines Lautsprechers wird dabei linear beweglich im Spalt eines Topfmagnets geführt. Der Topfmagnet stellt ein konstantes Magnetfeld zur Verfügung. Ein Bestromen der Tauchspule führt aufgrund der prinzipbedingten Lorenzkraft zu einer Relativbewegung zwischen der Spule und dem Topfmagnet. Die Schubkraft dieses Stellglieds ist eine Funktion des Stromes. Die Richtung der Schubkraft wird durch die Spannungspolarität vorgegeben. Die Relativbewegung zwischen dem ortsfesten und dem beweglichen Teil des Stellgliedes wird benutzt, um die Greifelementeträger bzw. die Greifelemente gegenüber ihrem tragenden Gehäuse zu verschieben.

In den Ausführungsbeispielen ist die Tauchspule ortsfest am Vorrichtungsgehäuse befestigt, während der Topfmagnet als bewegliches Teil auf die entsprechenden Getriebeteile wirkt. Selbstverständlich kann auch der Topfmagnet im Gehäuse ortsfest angeordnet sein, während die Tauchspule - wie beim Lautsprecher - die antreibende Relativbewegung ausführt.

Das oder die elektrodynamischen Stellglieder werden innerhalb des Gehäuses der Greifvorrichtung sowohl zum Greifen als auch zum Loslassen des Werkstücks bzw. der Last bestromt. Nach den Ausführungsbeispielen wird dennoch das Werkstück oder die Last mittels Federkraft kraft- und/oder formschlüssig gehalten. Die Federkraft der stets vorgespannten Federelemente kann von einer Schraubendruckfeder, einer Zugfeder, einer Torsionsfeder, einer Blattfeder, einer Tellerfeder oder dergleichen aufgebracht werden. Ferner sind zur Kraftaufbringung auch Gummifedern oder eine pneumatische Federung denkbar. Hierfür können auch mehrere Federn oder verschiedene Federsysteme miteinander kombiniert werden.

Das Getriebe der Vorrichtung befindet sich nach den Ausführungsbeispielen jeweils in der Offenstellung in einer definierten Blockierlage, bei der die Federelemente z.B. mindestens 60 % der maximalen Vorspannung erreichen. Die Blockierlage kann aber auch zum Greifen verwendet werden, sofern der Greifhub dauerhaft konstant ist. Kleinere Greifhubdifferenzen können in diesem Fall ggf. durch elastische Greifelemente oder elastische Getriebeteile ausgeglichen werden.

Weitere Einzelheiten der Erfindung ergeben sich aus den Unteransprüchen und der nachfolgenden Beschreibung mehrerer schematisch dargestellter Ausführungsbeispiele.
- Figur 1:: dimetrisch dargestellte Außengreifvorrichtung, teilweise längsgeschnitten;
- Figur 2:: Längsschnitt zu Figur 1, jedoch mit Greifelementen im geöffneten Zustand;
- Figur 3:: Längsschnitt zu Figur 1, mit Greifelementen im geschlossenen Zustand;
- Figur 4:: Längsschnitt zu Figur 1, mit Greifelementen im greifenden Zustand;
- Figur 5:: oberer Bereich einer dimetrisch dargestellten Innengreifvorrichtung, teilweise längsgeschnitten;
- Figur 6:: oberer Bereich nach Figur 5, jedoch teilweise ohne Getriebegehäuse;
- Figur 7:: Längsschnitt zum Gegenstand nach Figur 5, jedoch mit Greifelementeträgern im geöffneten Zustand;
- Figur 8:: Längsschnitt wie Figur 7, jedoch mit Greifelementeträgern im geschlossenen Zustand;
- Figur 9:: Querschnitt durch das Getriebe nach Figur 5;
- Figur 10:: dimetrisch dargestelltes Getriebegehäuse zum Gegenstand nach Figur 5;
- Figur 11:: Schema für ein Außengreifergetriebe in Offenstellung;
- Figur 12:: Schema für ein Außengreifergetriebe in Geschlossenstellung;
- Figur 13:: Schema für ein Innengreifergetriebe in Offenstellung;
- Figur 14:: Schema für ein Innengreifergetriebe in Geschlossenstellung.

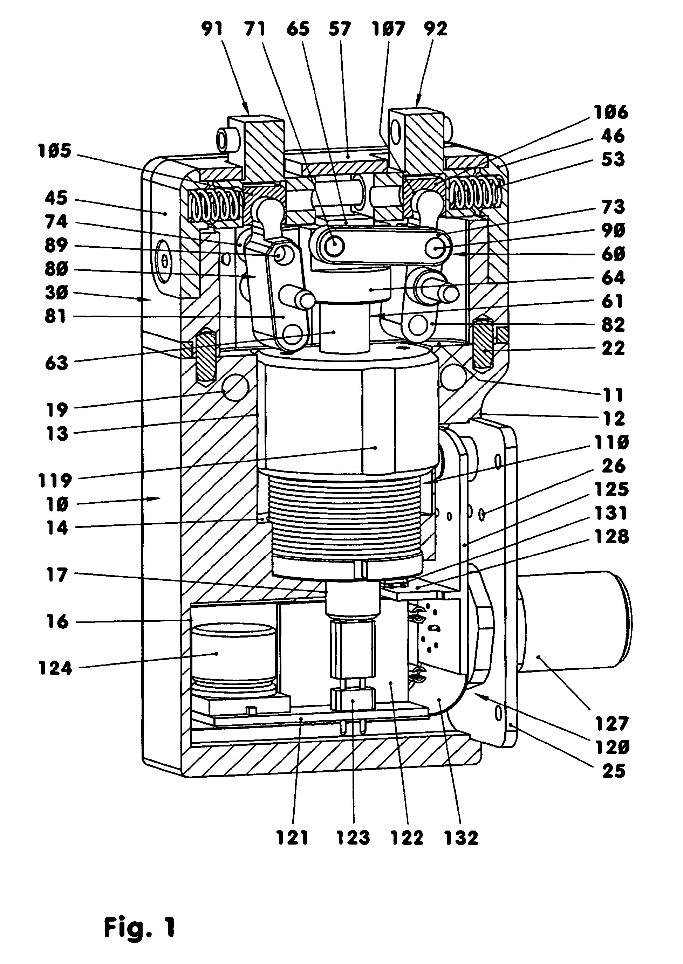

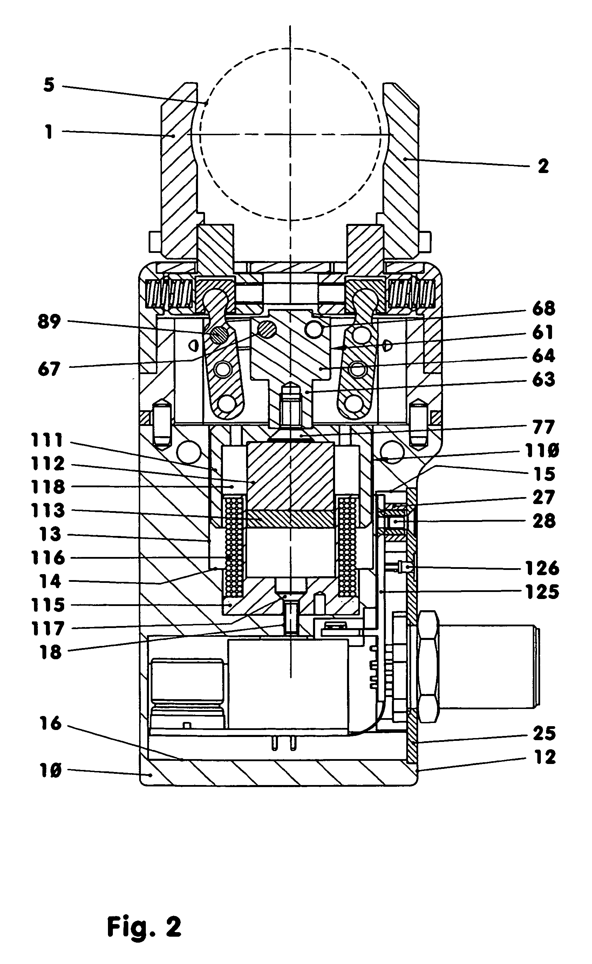

Die Figur 1 zeigt eine als Außengreifer wirkende Greifvorrichtung in der Offenstellung. Im mittleren Bereich des Gehäuses (10, 30) ist ein elektrodynamisches Stellglied (110) angeordnet. Das Stellglied (110) wirkt über eine Schiebekulisse (61) im oberen Gehäusebereich auf zwei Kniehebel (73, 74), von denen jeder eine Pendelschwinge (81, 82) gegen die Kraft von zwei Schraubenfedern (53) nach außen drängt. Jede Pendelschwinge (81, 82) greift hierbei in einen linear beweglichen Greifelementeträger (91, 92) ein. An jedem Greifelementeträger (91, 92) ist ein Greifelement (1, 2) angeordnet, vgl. Figur 2. Die beiden Kniehebel (73, 74) - als Teile eines ganzen Kniehebelgetriebes (60) - und die nachgeordneten Pendelschwingen (81, 82) - als Teile eines Hebelgetriebes (80) - bilden ein ebenes Getriebe.

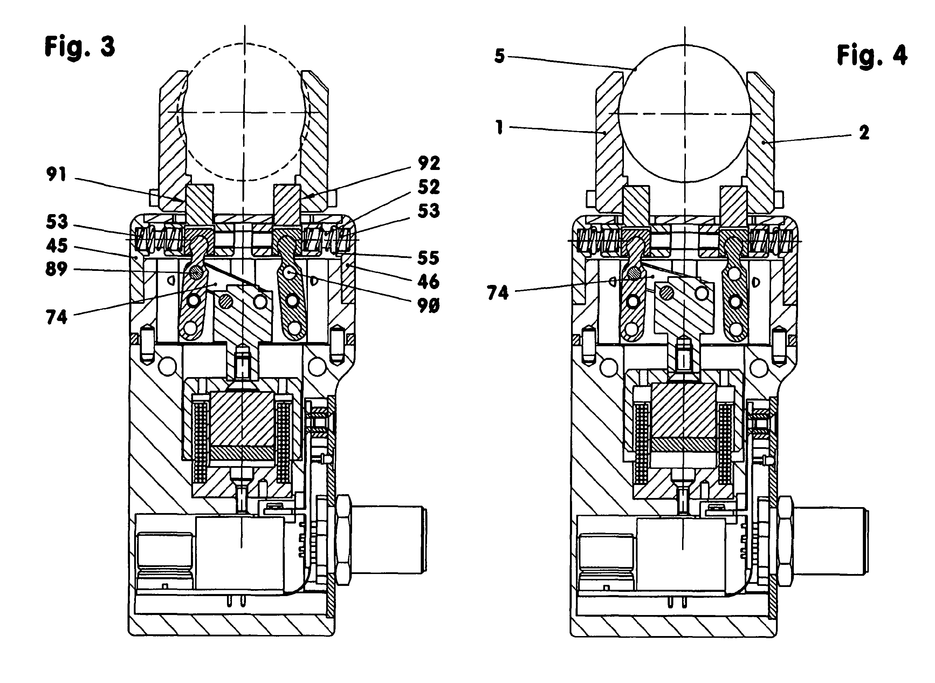

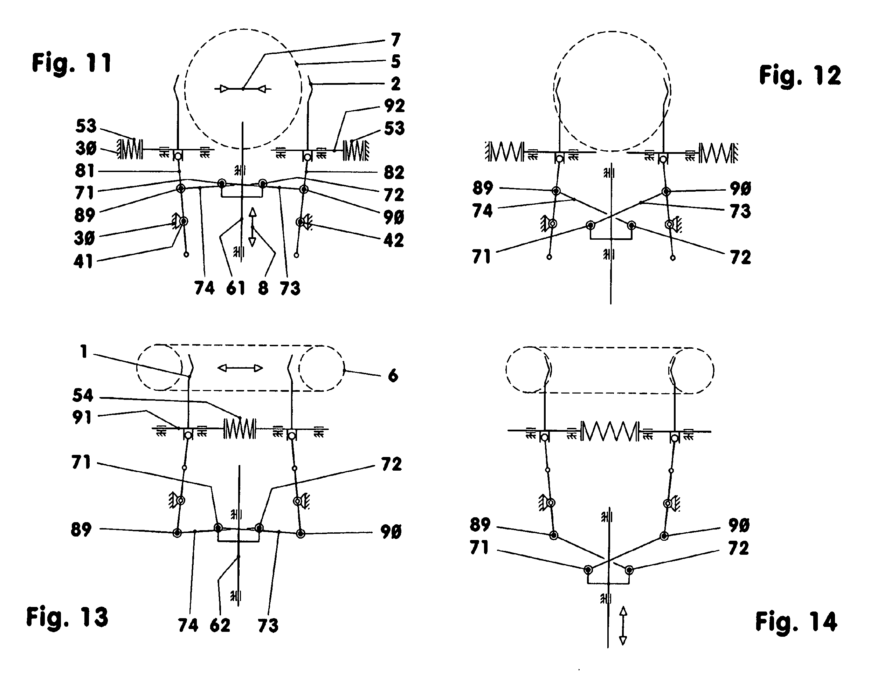

Die zwei Greifelemente (1, 2) greifen in einer Greifstellung nach Figur 4 ein z.B. zylindrisches Werkstück (5) oder nach Figur 13 z.B. ein torusförmiges Werkstück (6). Die Greifstellung, vgl. Figur 4 liegt in der Regel zwischen der Offenstellung, vgl. Figur 2, und der Schließstellung, vgl. Figur 3. Sie kann aber auch die Schließstellung sein. In diesem Fall wird das Werkstück (5) ggf. nur formschlüssig gehalten.

Im unteren Gehäusebereich befinden sich die Anschlüsse und die elektronischen Baugruppen (120) z.B. zur Lageerkennung des beweglichen Teils des Stellgliedes (110).

Nach Figur 1 besteht das Gehäuse (10, 30) im Wesentlichen aus einem Stellgliedgehäuse (10) und einem Getriebegehäuse (30). Beide Gehäuseteile sind aus einer Aluminiumlegierung hergestellt. Das gesamte Gehäuse (10, 30) ist z.B. 76 mm hoch, 42 mm breit und 27 mm tief. Seine Oberflächen sind hartcoatiert, bzw. anodisch oxidiert.

Das Stellgliedgehäuse (10) ist ein nahezu quaderförmiger Körper, dessen plane Oberseite (11) als Montagefuge gegenüber dem Getriebegehäuse (30) dient. In seiner Oberseite (11) und in seiner rechten Wandung (12) sind u.a. größere Ausnehmungen (13; 15, 16) angeordnet. Die in die Oberseite eingearbeitete Ausnehmung (13) ist eine zentrale zweistufige Bohrung. Der größere und obere Bereich der Stufenbohrung (13) dient der Führung des beweglichen Teils des Stellgliedes (110). Im kleineren und unteren Bereich der Bohrung ist der unbewegliche Teil des Stellgliedes (110) zentriert angeordnet. Zwischen den beiden Bereichen liegt ein planer Bund (14).

Die Ausnehmung, die von der rechten Wandung (12) aus in das Stellgliedgehäuse eingearbeitet ist, besteht aus einer rechteckigen Ausnehmung (15) mit großem Querschnitt und geringer Tiefe, sowie einer daran anschließenden tiefen, ebenfalls rechteckigen Ausnehmung (16) mit kleinerem Querschnitt. In der tiefen Ausnehmung (16) ist auf einer unteren, horizontalen Platine (121) eine Elektronik zur Ansteuerung des Stellgliedes (110) untergebracht, während in der großflächigen Ausnehmung (15) eine seitliche Platine (125) sitzt, an der u.a. ein Gerätestecker (127), drei Leuchtdioden (126) und eine Aufsatzplatine (128) mit einem Hallsensor (131) angeordnet sind. Die z.B. rechtwinkelig zueinander platzierten Platinen (121, 125) sind über eine mit Leiterbahnen ausgestattete flexible Filmplatine (132) miteinander verbunden. Ggf. werden die Platinen (121, 125, 132) zwischen zwei einander gegenüberliegenden Kunststoffformteilen eingeklemmt. Dazu haben die Kunststoffformteile Führungsnuten, in die die Platinen ca. 0,5 mm tief eingesteckt sind.

Die Ausnehmung (15) wird mittels eines Gehäusedeckels (25) nahezu gasdicht verschlossen. Am Gehäusedeckel (25) ist die Platine (121) unter Zwischenlegung einer Distanzhülse (27) mittels einer Spezialverschraubung (28) befestigt. Zugleich trägt der Gehäusedeckel (25) den Gerätestecker (127). Zwischen der Platinenverschraubung (28) und dem Gerätestecker (127) befinden sich drei nebeneinander liegende Bohrungen (26), in die die Leuchtdioden (126) hineinragen.

Die Stufenbohrung (13) und die tiefe Ausnehmung (16) sind über drei nebeneinander liegende Bohrungen (17, 18) miteinander verbunden. Die mittlere, kleinere Bohrung ist eine Gewindebohrung (18), in der das ortsfeste Teil des Stellgliedes (110) verschraubt wird. In den beiden größeren Bohrungen (17) stecken Isolierhülsen, in denen die elektrischen Anschlüsse des Stellgliedes (110) in die untere Ausnehmung (16) geführt werden.

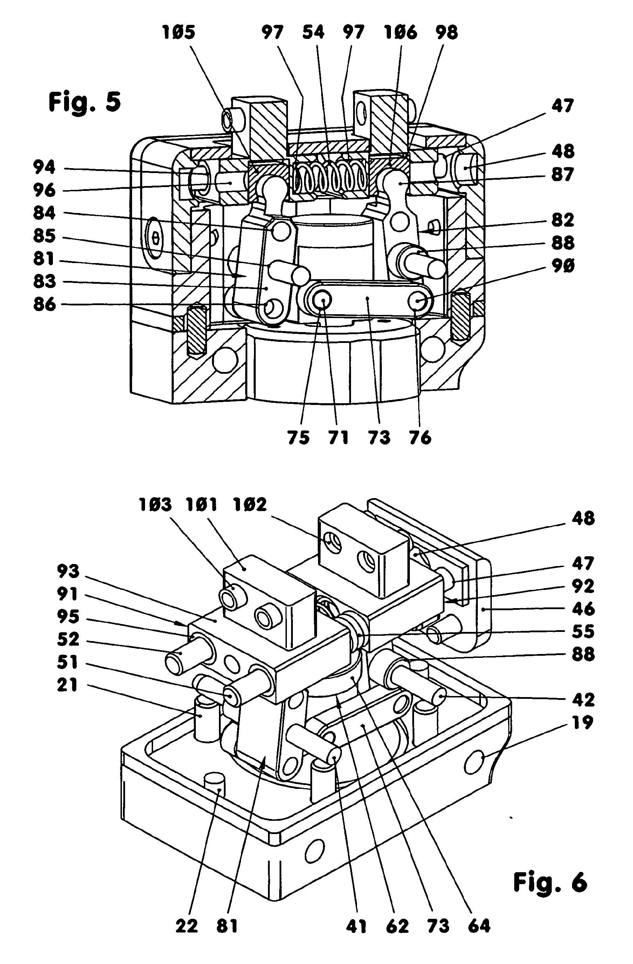

Um die beiden Gehäuseteile (10, 30) miteinander zu verbinden, weist das Stellgliedgehäuse (10) z.B. vier, zur zentralen Stufenbohrung (13) parallele Durchgangsbohrungen auf, in denen die Schrauben (21) geführt sind, vgl. Figur 6, die in das Getriebegehäuse (30) eingeschraubt sind. Beide Gehäuseteile (10, 30) sind mittels zweier Passstifte (22) aneinander zentriert.

Im mittleren Bereich des Stellgliedgehäuses (10) befinden sich zwei Querbohrungen (19), vgl. Figur 1 und 6, über die die Vorrichtung an einem diese tragenden Maschinenteil befestigt werden kann. An der - hier nicht dargestellten - Unterseite des Stellgliedgehäuses (10) befinden sich vier weitere als Sacklöcher ausgebildete Gewindebohrungen, über die die Vorrichtung ebenfalls am tragenden Maschinenteil fixierbar ist. Ggf. trägt die Unterseite auch zwei Zentrierbohrungen.

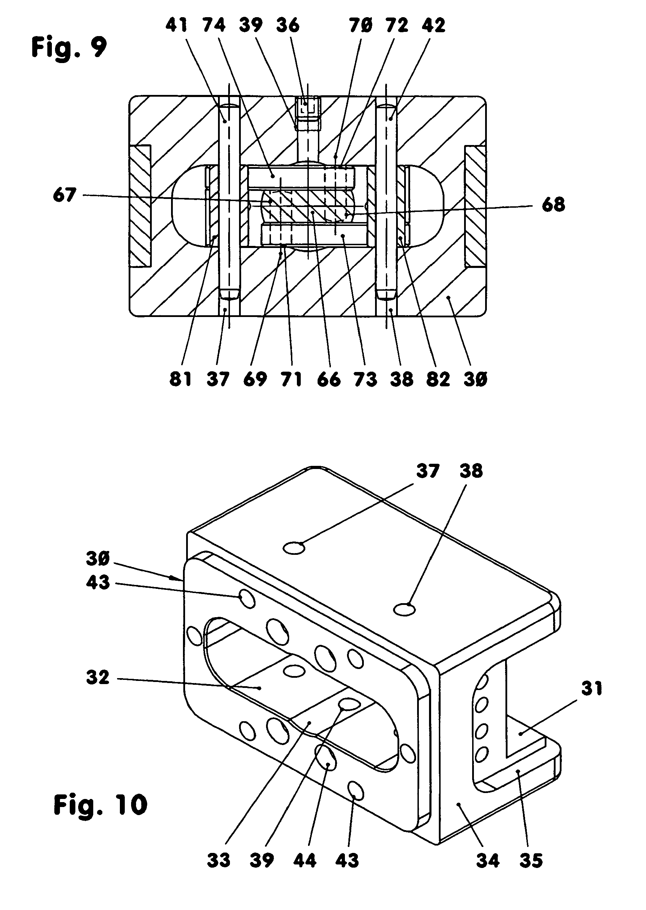

Das Getriebegehäuse (30) hat eine quaderförmige Außenkontur, in deren Oberseite zur Lagerung der Greifelementeträger (91, 92) eine breite und tiefe Längsnut (31) eingefräst ist, vgl. Figur 10. Zwischen dem Grund der Längsnut (31) und der als Montagefuge dienenden Unterseite des Getriebegehäuses (30) erstreckt sich eine Ausnehmung (32), die zumindest annähernd einen rechteckförmigen Querschnitt aufweist. Die Abweichung vom idealen Rechteck ergibt sich durch die ausgerundeten Ecken und eine zentrale Bohrung (33), deren Durchmesser nur 0,5 mm größer ist als die kürzere Seite des Rechteckquerschnitts. An den Teilmantelflächen dieser Bohrung (33) wird die Schiebekulisse (61, 62) zusätzlich mit Spiel geführt. In den kleinen seitlichen Wandungen (34) des Getriebegehäuses (30) befinden sich jeweils zumindest annähernd rechteckige Ausnehmungen (35), die jeweils eine Tiefe von 2,5 mm haben. In jeder Ausnehmung (35) sitzt zentriert und verschraubt jeweils eine Lagerplatte (45, 46).

Die einzelne Lagerplatte (45, 46), vgl. Figur 6, hat neben den Zentrier- und Verschraubungsbohrungen zwei Lagerbohrungen (47) und eine zwischen den Lagerbohrungen (47) angeordnete Federtopfbohrung (48).

In den großen Seitenwandungen des Getriebegehäuses (30), vgl. Figur 10, befinden sich zwei Durchgangsbohrungen (37, 38) zur Lagerung der Schwenkbolzen (41, 42) und eine Gewindebohrung (39), vgl. Figur 9. Die Mittellinien dieser drei Bohrungen (37, 38, 39) liegen in einer Ebene. Die Mittellinien der Durchgangsbohrungen (37, 38) haben z.B. einen Abstand von 18,5 mm.

Die Gewindebohrung (39) des relativ dichten Gehäuses (10, 30) ist in der Regel mittels eines Gewindestifts (36) verschlossen. Soll jedoch die Vorrichtung in einem Reinstraum verwendet werden, wird über die Gewindebohrung (39) am Gehäuse (10, 30) ein Unterdruckschlauch angeschlossen, um die in den Gehäuseinnenraum gelangte Umgebungsluft abzusaugen.

Wird die Vorrichtung dagegen z.B. in besonders staubhaltiger Umgebung eingesetzt, wird das Gehäuseinnere über den an der Gewindebohrung (39) angeschlossenen Überdruckschlauch mit sauberer Sperrluft versorgt. Durch den Überdruck an den Arbeitsfugen kann so kein Schmutz in das Gehäuseinnere eindringen.

An der Unterseite des Getriebegehäuses (30), vgl. Figur 10, befinden sich die vier Gewindebohrungen (43), in denen die Schrauben (21) bei montierter Vorrichtung eingeschraubt sind. Zwischen je zwei seitlichen Gewindebohrungen befinden sich zwei wenige Millimeter tiefe Sacklöcher (44), in denen ggf. Permanentmagnete eingesetzt werden können, die dann z.B. bündig mit der Unterseite des Getriebegehäuses (30) abschließen.

Das im Stellgliedgehäuse (10) eingebaute Stellglied (110) besteht aus einem ortsfesten und einem linear beweglichen Teil, vgl. Figur 2. Das ortsfeste Teil ist eine Spule, die aus einem Spulenkörper (115) und einer Wicklung (116) besteht. Der Spülenkörper (115) ist mittels einer Schraube (117) am Grund der Stufenbohrung (13) des Stellgliedgehäuses (10) festgeschraubt. Der Spulenkörper (115) ist beispielsweise aus Kunststoff oder einer Aluminiumlegierung hergestellt.

Das bewegliche Teil des Stellglieds (110) ist eine aus einem außen gasnitrierten Einsatzstahl gefertigte Glocke (111), in der ein zylindrischer Magnetkern (112), z.B. ein Neodym-Magnet, eingelassen ist. Der Magnetkern (112) kann auch die Form eines zylindrischen Rohres aufweisen. Am unteren Ende des Magnetkerns (112) ist eine aus dem Werkstoff X90CrMoV18 gefertigte Jochplatte (113) angeordnet. Hierbei schließt die Unterseite der Jochplatte (113), die auch eine zentrale Bohrung aufweisen kann, mit der unteren Kante der Glocke (111) ab. Der Magnetkern (112) und die Jochplatte (113) haben zumindest annähernd den gleichen Außendurchmesser. Beide Teile (112, 113) sind untereinander und gegenüber der Glocke (111) z.B. verklebt.

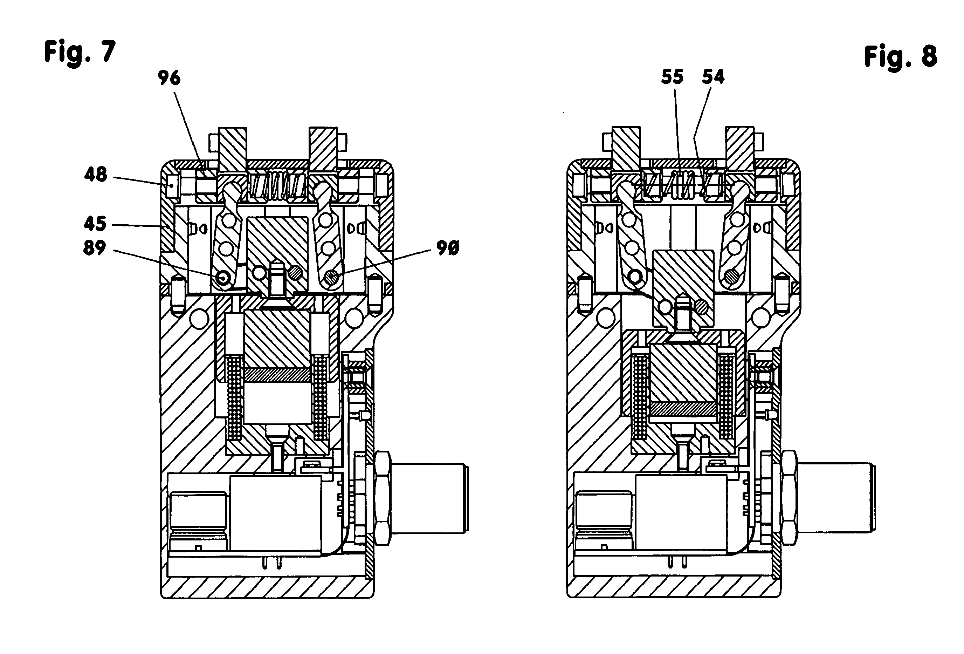

Zwischen dem Verbund aus Magnetkern (112) und Jochplatte (113) und der radialen Innenkontur der Glocke (111) befindet sich ein Ringspalt (118), in den die Spule (115, 116) - zumindest bei geschlossener Greifelementestellung, vgl. Figuren 3 und 8 - mit geringem radialem Spiel nahezu vollständig hineinragt.

Die Glocke (111) ist in der Wandung des unteren Bereichs der Stufenbohrung (13) mit geringem Spiel gleitgelagert geführt. Das Spiel beträgt maximal 0,1 mm. Um einen Druckausgleich zwischen der Ober- und der Unterseite der Glocke (111) zu ermöglichen, ist deren zylindrische Außenfläche beispielsweise an vier äquidistant am Umfang verteilten Stellen (119) plangefräst, vgl. Figuren 1 und 5. Zugleich befinden sich in der oberen Stirnseite der Glocke (111) zwei Überströmbohrungen, die im Ringspalt (118) enden.

Mittig weist die obere Stirnseite der Glocke (111) eine Einsenkung auf, an der eine - für einen Außengreifer vorgesehene - Schiebekulisse (61) mittels einer Schraube (77) befestigt ist. Die Schiebekulisse (61) ist nach den Figuren 1 und 2 ein gestufter Zylinderkörper, der einen zylindrischen Fuß (63) und einen Führungszylinder (64) aufweist. Der Fuß (63) hat z.B. einen Durchmesser von 6 mm, während der Führungszylinder (64) einen Durchmesser von 11 mm hat. Im oberen Bereich hat der Führungszylinder (64) einen zumindest bereichsweise quaderförmigen Lappen (65). Dieser Lappen (65), der z.B. eine Wandstärke von 4 mm hat, hat zwei Querbohrungen (67, 68), deren parallele Mittellinien die theoretischen Schwenkachsen (69, 70) der Kniehebel (73, 74) darstellen, vgl. Figur 9. Die Schwenkachsen (69, 70) haben einen Abstand von z.B. 6,5 mm.

In der Figur 5 ist eine alternative -für einen Innengreifer vorgesehene - Schiebekulisse (62) dargestellt. Ihr Fuß (63) ist gegenüber der Schiebekulisse (61) verkürzt ausgeführt, während der Führungszylinder (64) länger ist. Der Führungszylinder (64) weist zwei einander gegenüber liegende Quernuten auf. Zwischen den parallelen Grundflächen dieser Quernuten bleibt ein Steg (66) von z.B. 4 mm Breite, stehen, vgl. auch Figur 9. Der Steg (66) weist die Querbohrungen (67, 68) auf, die mit den Querbohrungen des Lappens (65) der anderen Schiebekulisse (61) vergleichbar sind.

Beidseits der Schiebekulisse (61, 62) lagern im Getriebegehäuse (30) auf dort in die Querbohrungen (37, 38) eingepresste Schwenkbolzen (41, 42) die Pendelschwingen (81, 82). Jede Pendelschwinge (81, 82), vgl. Figur 5, besteht aus einem zumindest annähernd quaderförmigen Grundkörper (83), einer Hülse (88) und einem Zylinderschwenkkopf (87). Der Grundkörper (83) weist drei in einer Ebene liegende parallele Bohrungen (84, 85, 86) auf, wobei die benachbarten Bohrungen jeweils z.B. 5 mm voneinander entfernt sind. Im oberen Bereich der Pendelschwinge (81, 82) ist der querliegende Zylinderschwenkkopf (87) angeformt. Der Zylinderschwenkkopf (87) hat z.B. einen Durchmesser von 3,5 mm und die halbe Tiefe des Grundkörpers (83). Letztere ist entlang der Mittellinien der Bohrungen (84, 85, 86) gemessen. Die Mittellinie des Zylinderschwenkkopfes (87) verläuft parallel zu den Mittellinien der Bohrungen (84, 85, 86) und liegt zudem in deren Ebene. Von der Mittellinie der nächsten Bohrung ist sie z.B. 5 mm entfernt.

An der Seitenfläche des Grundkörpers (83), deren Ebene deckungsgleich mit der Stirnfläche des Zylinderschwenkkopfs (87) ist, ist die Anformhülse (88) so angeformt, dass ihre Bohrung mit der mittleren Bohrung (85) fluchtet. Die Tiefe der Anformhülse (88) entspricht der halben Tiefe des Grundkörpers (83). Die Tiefe des Grundkörpers (83) misst z.B. 10 mm. Dieser Wert ist geringfügig kleiner - z.B. 0,1 mm -als die Breite der Ausnehmung (32) des Getriebegehäuses (30), vgl. Figur 9.

Beide Pendelschwingen (81, 82) sind baugleich ausgeführt, wobei nach den Figuren 1, 5 und 6 bei der Pendelschwinge (81) die Anformhülse (88) nach hinten und bei der Pendelschwinge (82) nach vorn ragt.

Jede Pendelschwinge (81, 82) ist mit der Schiebekulisse (61) mittels eines Kniehebels (73, 74) gekoppelt. Jeder Kniehebel (73, 74) hat die Bauform einer Lasche, die an jedem Ende eine Bohrung (75, 76) trägt. Die Mittellinien der Bohrungen (75, 76) sind z.B. 13,05 mm voneinander entfernt. Um den jeweiligen Kniehebel (73, 74) gelenkig mit der Schiebekulisse (61) und der entsprechenden Pendelschwinge (81, 82) zu verbinden, sind in den Bohrungen (67, 68) der Schiebekulisse (61) die Schwenkzapfen (71, 72) eingepresst. In den Bohrungen (84) der Pendelschwingen (81, 82) sind jeweils die Schwenkzapfen (89, 90) eingepresst. Die Schwenkzapfen (71, 72; 89, 90) sitzen in den Bohrungen (75, 76) der Kniehebel (73, 74) mit einem Spiel von z.B. 0,05 mm.

Die Pendelschwingen (81, 82) übertragen ihre Schwenkbewegung in die Greifelementeträger (91, 92) der Greifvorrichtung mit Hilfe von Kulissensteinen (105, 106).

Die beiden z.B. baugleichen Greifelementeträger (91, 92) bestehen jeweils z.B. aus einem quaderförmigen Schlitten (93), an dessen Oberseite, z.B. mittig, ein ebenfalls quaderförmiger Kragarm (101) nach oben absteht, vgl. Figuren 5 und 6. Der einzelne Schlitten (93) hat zwei parallele, durchgehende Führungsbohrungen (94) und - nach Figur 5 - außenseitig eine Gewindebohrung (96) sowie innenseitig eine mit einem Boden versehene Federtopfbohrung (97). Alle vier Bohrungen (94, 96, 97) liegen in einer Ebene mit zueinander parallelen Mittellinien, wobei die Mittellinien der Gewindebohrung und der Sacklochbohrung zueinander fluchten.

Der Schlitten (93) weist an seiner Unterseite, zur jeweiligen Führung eines Kulissensteines (105, 106), ein Langloch (98) auf, das quer zu den Führungsbohrungen (94) orientiert ist. Das Langloch (98) befindet sich z.B. direkt unterhalb des jeweiligen Kragarmes (101). In das Langloch (98) ragt die Gewindebohrung (96) mittig hinein. Die Breite des Langlochs (98) ist gerade so bemessen, dass der entsprechende Kulissenstein (105, 106) mit geringem Spiel in Querrichtung hineinpasst. Die Führungsbohrungen (94) sind zumindest in ihren äußeren Bereichen mit Gleitlagerbuchsen (95) ausgestattet, vgl. Figur 6. Über die Gleitlagerbuchsen (95) sitzen die Greifelementeträger (91, 92) - zur Ausbildung einer Geradführung - auf den beiden parallelen, zylindrischen Führungsstangen (51, 52), die von den Lagerplatten (45, 46) gehalten werden.

Selbstverständlich können die Greifelementeträger in fast jeder anderen beliebigen Weise wälz- oder gleitgelagert am Gehäuse (10, 30) gelagert und geführt sein.

Zwischen den baugleichen Greifelementeträgern (91, 92) der Figuren 5 und 6 ist eine Schraubendruckfeder (54) angeordnet, die sich in den entsprechenden Federtopfbohrungen (97) abstützt. Nach Figur 6 sitzen zwischen den Greifelementeträgern (91, 92) auf den Führungsstangen (51, 52) jeweils z.B. vier Gummiringe (55), die als Kollisionspuffer dienen.

In den Figuren 1 bis 4 haben die Greifelementeträger (91, 92) gegenüber den Figuren 5 und 6 die Positionen getauscht, sodass dort die Federtopfbohrungen (97) der Schlitten (93) jeweils den Federtopfbohrungen (48) der Lagerplatten (45, 46) gegenüber liegen. Nach den Figuren 1 bis 4 liegt zwischen den einander gegenüberliegenden Teilen (91, 92; 45, 46) je eine Schraubendruckfeder (53). Zudem trägt hier jede Führungsstange (51, 52) in diesem Außenbereich je einen Gummiring (55) als Anschlagpuffer.

Die in den Greifelementeträgern (91, 92) sitzenden Kulissensteine (105, 106) haben im Wesentlichen die Form eines Quaders mit zentraler Quernut (107), der nach unten hin offen ist, vgl. Figur 1. Der jeweilige Kulissenstein (105, 106) hat eine Breite von 5,5 mm. Die Quernut (107) hat einen hintergreifbaren Querschnitt, der sich im Wesentlichen aus der Überlagerung eines Kreises und eines Rechtecks ergibt. Der Kreis hat dabei einen Durchmesser von 3,5 mm, während das Rechteck eine Breite von z.B. 3 mm hat. Das Zentrum des Kreises ist z.B. um 0,65 mm gegenüber dem Zentrum der Quaderform des Kulissensteins (105, 106) nach unten hin versetzt. Der zylindermantelförmige Teil der Quernut (107) überdeckt einen Mantelwinkel von z.B. 220 Winkelgraden. Mit diesem zylindermantelförmigen Nutwandungsabschnitt umgreift der Kulissenstein (105, 106) formschlüssig mit geringem Spiel den Zylinderschwenkkopf (87) der entsprechenden Pendelschwinge (81, 82).

Alternativ ist es denkbar, dass der Zylinderschwenkkopf, z.B. nach unten abstehend, an den jeweiligen Greifelementeträgern (91, 92) angeordnet ist. Die entsprechende Quernut (107) ist dann in die jeweilige Pendelschwinge (81, 82) eingearbeitet. Anstelle der an den Greifelementeträgern oder den Pendelschwingen angeformten Zylinderschwenkköpfe können dort auch seitliche Zapfen verwendet werden, die dann in u-förmige Gabeln der Pendelschwingen bzw. der Greifelementeträger eingreifen.

Die Greifelementeträger (91, 92) ragen mit ihren jeweiligen Kragarmen (101) nach oben hin aus dem Getriebegehäuse (30) heraus. Die Kragarme (101) werden, ohne eine Beschränkung ihrer funktionalen Bewegungsfreiheit, von einer plattenförmigen Führungsabdeckung (57) umgeben. Um den einzelnen Kragarm (101) herum befindet sich jeweils eine entsprechende Aussparung, die jedoch zum Getriebeinneren hin durch die darunter liegenden Schlitten (93) verdeckt ist.

Die Figuren 2 bis 3 zeigen als Greifvorrichtung einen Außengreifer. Ein solcher Außengreifer ergreift zangenartig das aufzunehmende Werkstück (5), vgl. Figur 4. Die für den Greifvorgang erforderlichen Getriebe (60, 80) sind in den Figuren 11 und 12 auch schematisch dargestellt. In den Figuren 2 und 11 ist die Vorrichtung in ihrer Offenstellung gezeigt, d.h. die Greifelemente (1, 2) befinden sich jeweils in ihrer äußeren Position in einer Blockierlage. Sie werden dort entgegen der Wirkung der Federelemente (53) mittels der Getriebe (60, 80) gehalten. Dazu befindet sich die Schiebekulisse (61) in ihrer oberen Position. Der Magnetkern (112) des Stellgliedes (110) ist zu ca. 75 % aus dem Spulenkörper (115) herausgefahren. Die Ebene der Mittellinien der Schwenkzapfen (71, 72) der Schiebekulisse (61) befindet sich z.B. 5,8 mm oberhalb der Ebene, in der die Mittellinien der Schwenkbolzen (41, 42) des Getriebegehäuses (30) liegen.

Die Ebene der Mittellinien der Schwenkzapfen (89, 90) der Pendelschwingen (81, 82) liegt parallel unterhalb der Mittellinien der schiebekulissenseitigen Schwenkzapfen (71, 72). Der Versatz beträgt hier z.B. 0,83 mm. Die sich z.B. unter einem Kreuzungswinkel von 7,3 Winkelgraden überkreuzenden Kniehebel (73, 74) befinden sich somit in einer stabilen Lage oberhalb der quasistabilen Kniehebelstrecklage. Letzter wäre gegeben, wenn alle Mittellinien der die beiden Kniehebel (73, 74) lagernden vier Schwenkzapfen (71, 72; 89, 90) in einer Ebene liegen würden.

Die Pendelschwingen (81, 82) sind gegenüber der Hubrichtung (8) um z.B. 6 Winkelgrade nach außen geschwenkt.

Aufgrund der Wirkung der Federelemente (53) ist diese Getriebelage stabil. Diese Stabilität kann zusätzlich verstärkt werden, indem im Getriebegehäuse (30), vgl. Figur 10, in die Bohrungen (43) z.B. zylindrische Permanentmagnete eingesetzt werden. Letztere stehen dann in Wechselwirkung mit dem Magnetkern (112), d.h. die Permanentmagnete und der Magnetkern (112) ziehen sich gegenseitig an, wenn sich der Magnetkern (112) im Bereich seiner oberen Endlage befindet. Die Permanentmagnete sorgen auch bei einem starken, fremd verursachten Vibrieren der Vorrichtung dafür, dass die stabile Strecklage der Kniehebel (73, 74) erhalten bleibt.

Wird nun ein kurzer Gleichstromstoß auf die Wicklung gegeben, wird der Magnetkern (112) schlagartig in den Spulenkörper (115) gezogen. Der Stromstoß dauert beispielsweise bei einer Spannung von 24 V und einem Strom vom 5 A ca. 15 msec an. Die Bewegung der mit dem Magnetkern (112) gekoppelten Schiebekulisse (61) wird beim Greifen des Werkstücks (5) durch das Anlegen der Greifelemente (1,2) an das Werkstück (5) abgebremst. Während des Greifvorganges schwenken die Kniehebel (73, 74) durch die quasistabile Strecklage hindurch in eine in Figur 4 gezeigte Lage. Sie nehmen nach Figur 12 gegenüber der Greifrichtung (7) einen Winkel von z.B. 23,4 Winkelgraden ein.

Die Mittellinienebene der schiebekulissenseitigen Schwenkzapfen (71, 72) liegt nun mehrere Millimeter unterhalb der Mittellinienebene der pendelschwingenseitigen Schwenkzapfen (89, 90). Der Hub ist größer als 0,83 mm. Im Ausführungsbeispiel beträgt er z.B. 3,5 mm. Bei dieser Getriebestellung drücken die auf die Greifelementeträger (91, 92) wirkenden Schraubendruckfedern (53) die Greifelemente (1, 2) gegen das Werkstück (5). Die Greifkraft beträgt beispielsweise 10 N.

Liegt kein Werkstück zwischen den Greifelementen (1, 2), kommt die Glocke (111) des Stellgliedes (110) am Bund (14) der Stufenbohrung (13) zur Anlage, vgl. Figur 3. Die noch vorgespannten Schraubendruckfedern (53) halten die Greifelemente (1, 2) in ihrer Geschlossenlage, vgl. auch Figur 12. Die Mittellinienebene der schiebekulissenseitigen Schwenkzapfen (71, 72) liegt nun z.B. 5,17 mm unterhalb der Mittellinienebene der pendelschwingenseitigen Schwenkzapfen (71, 72).

Die Figuren 5 bis 9 zeigen einen Innengreifer, dessen Getriebeschema in den Figuren 13 und 14 dargestellt ist. Ein Innengreifer ist eine Vorrichtung, die das Werkstück (6) im Bereich einer Ausnehmung ergreift. In Figur 13 ist dazu nur beispielhaft als Werkstück (6) ein Torus dargestellt.

Da der Innengreifer zusammen mit dem Außengreifer ein System bildet, benutzt er mit Ausnahme der Schiebekulisse (62) und des Federelements (54) die gleichen Getriebebauteile (73, 74; 81, 82; 91, 92) wie der Außengreifer. Allerdings haben die Greifelementeträger (91, 92) auf den Führungsstangen (51, 52) ihre Position gewechselt. Nun befindet sich zwischen den Greifelementeträgern (91, 92) das Federelement (54), vgl. Figur 5 und 13.

Ferner werden die Kniehebel (73, 74) so weit nach unten verlagert, dass sie die Pendelschwingen (81, 82) - bei der Verwendung der anderen Schiebekulisse (62) - unterhalb der Schwenkbolzen (41, 42) an den in den Bohrungen (86) eingepressten Schwenkzapfen (89, 90) anlenken, vgl. auch Figur 5, 9 und 13.

In Figur 9 ist ein Querschnitt durch das Getriebegehäuse (30) dargestellt. In der Schnittebene liegen die Mittellinien der die Pendelschwingen (81, 82) lagernden Schwenkbolzen (41, 42). Im Zentrum des Querschnittes befindet sich der Steg (66) der Schiebekulisse (62), an dem die unterhalb der Schwenkbolzen (41, 42) gelegenen Kniehebel (73, 74) angelenkt sind.

Nach Figur 13 drückt das Federelement (54) die Greifelemente (1, 2) über die Greifelementeträger (91, 92) auseinander, sodass die Pendelschwingen (81, 82) mit ihren Schwenkzapfen (89, 90) die Kniehebel (73, 74) - wie in Figur 11 - in einer stabilen Lage, oberhalb der quasistabilen Strecklage halten. Die Pendelschwingen (81, 82) sind gegenüber der Hubrichtung (8) um z.B. 6 Winkelgrade nach innen geschwenkt. Die Ebene der Mittellinien der Schwenkzapfen (89, 90) der Pendelschwingen (81, 82) liegt parallel - um z.B. 0,83 mm versetzt - unterhalb der Mittellinien der schiebekulissenseitigen Schwenkzapfen (71, 72).

Fährt nun das Stellglied (110) aufgrund eines Stromstoßes nach unten, ohne mit den Greifelementen (1, 2) ein Werkstück (6) zu greifen, ist der Stellgliedhub beendet, wenn die Glocke (111) auf dem Bund (14) aufliegt, vgl. Figuren 8 und 14. Die Kniehebel (73, 74) sind z.B. um 27 Winkelgrade nach unten geschwenkt. Auch hier liegt die Mittellinienebene der schiebekulissenseitigen Schwenkzapfen (71, 72) z.B. 5,17 mm unterhalb der Mittellinienebene der pendelschwingenseitigen Schwenkzapfen (89, 90).

Bei dieser Greifvorrichtung nimmt das Getriebe (60, 80) bzw. der Magnetkern (112) des Stellglieds - im Zusammenhang mit einem bestimmten Werkstück (5, 6) - drei Positionen ein. Diese drei Positionen werden mittels eines Hallsensors (131) detektiert, der unterhalb des Stellglieds (110) im Stellgliedgehäuse (10) angeordnet ist. Der Hallsensor (131) liefert beispielsweise ein verstärktes und temperaturkompensiertes Gleichspannungssignal, das sich proportional zur magnetischen Flussdichte des sich axial zum Sensor bewegenden Magnetkerns (112) ändert. Die zu den Stellgliedendlagen passenden Gleichspannungssignale werden in einer Auswerteelektronik derart aufbereitet, dass für das Erreichen jeder Endlage eine separate Leuchtdiode bestromt wird.

Die Zwischenstellung der Greifelemente (1, 2) beim Fassen eines Werkstücks (5, 6) variiert mit der Werkstückbreite im Greifbereich. Ggf. ist die geräteinterne oder eine externe Auswerteelektronik mit einer lernfähigen Software ausgestattet, die abhängig vom Werkstücktyp das Erreichen der Greifposition erkennt, um damit ebenfalls eine separate LED (126) anzusteuern, sodass die gehäuseseitigen LEDs die Greifelementepositionen "offen", "gegriffen" und "geschlossen" visuell anzeigen. Selbstverständlich können diese Signale auch über den Gerätestecker (127) an eine externe Vorrichtungssteuerung weitergegeben werden.

Einige Getriebeteile sind gegen- oder ineinander mit geringem Spiel gelagert. Ein derartiges Spiel misst in der Regel zwischen 0,05 und 0,2 mm.

### Bezugszeichenliste:

- 1, 2: Greifelemente, Greifbacken
- 5: Werkstück, Zylinder für Außengreifer
- 6: Werkstück, Zylinder für Innengreifer
- 7: Greifrichtung, Querrichtung
- 8: Stellgliedhubrichtung, Schubrichtung
- 10: Stellgliedgehäuse, Gehäuse, Gehäuseteile
- 11: Oberseite
- 12: Wandung, rechts
- 13: Stufenbohrung; Ausnehmung, oben
- 14: Bund
- 15: Ausnehmung, flach
- 16: Ausnehmung, tief
- 17: Bohrung, Verbindungsbohrungen
- 18: Gewindebohrung
- 19: Querbohrungen zur Vorrichtungsbefestigung
- 21: Schrauben für Gehäuseverschraubung
- 22: Passstifte in Montagefuge
- 25: Gehäusedeckel, unten
- 26: Bohrungen für LED's
- 27: Distanzhülse
- 28: Spezialverschraubung
- 30: Getriebegehäuse, Gehäuse; Gehäuseteile
- 31: Längsnut
- 32: Ausnehmung, durchgängig
- 33: Bohrung, zentral
- 34: Wandung, seitlich, klein
- 35: Ausnehmung, seitlich
- 36: Gewindestift
- 37, 38: Durchgangsbohrungen, quer
- 39: Gewindebohrung, ggf. für Schlauchanschluss
- 41, 42: Schwenkbolzen in (30)
- 43: Gewindebohrungen für (21)
- 44: Sacklöcher
- 45, 46: Lagerplatte
- 47: Lagerbohrungen
- 48: Federtopfbohrung
- 51, 52: Führungsstangen
- 53: Schraubendruckfedern, außen
- 54: Schraubendruckfeder, mittig
- 55: Gummiringe, Anschlagpuffer, Kollisionspuffer
- 57: Führungsabdeckung, oben
- 60: Kniehebelgetriebe
- 61: Schiebekulisse für Außengreifer
- 62: Schiebekulisse für Innengreifer
- 63: Fuß
- 64: Führungszylinder
- 65: Lappen
- 66: Steg
- 67, 68: Querbohrungen
- 69, 70: Schwenkachsen, Mittellinien
- 71, 72: Schwenkzapfen in (61, 62)
- 73, 74: Kniehebel
- 75: Bohrung, innen
- 76: Bohrung, außen
- 77: Schraube

- 80: Hebelgetriebe
- 81, 82: Pendelschwinge
- 83: Grundkörper
- 84: Bohrung, oben
- 85: Bohrung, Mitte
- 86: Bohrung, unten
- 87: Zylinderschwenkkopf
- 88: Hülse, Anformhülse
- 89, 90: Schwenkzapfen in (81, 82)
- 91, 92: Greifelementeträger
- 93: Schlitten
- 94: Führungsbohrungen
- 95: Gleitlagerbuchsen
- 96: Gewindebohrung, Mitte
- 97: Federtopfbohrung
- 98: Langloch
- 101: Kragarm
- 102: Montagebohrung
- 103: Zentrierhülsen
- 105, 106: Kulissenstein
- 107: Quernut
- 110: Stellglied
- 111: Glocke, Topf
- 112: Magnetkern, Permanentmagnet
- 113: Jochplatte
- 115: Spulenkörper, ortsfest; Spule
- 116: Wicklung, Spule
- 117: Schraube
- 118: Ringspalt
- 119: Planflächen
- 120: Ansteuerung
- 121: Platine, horizontal
- 122: Aufsatzplatine, vertikal
- 123: Steckkontakte
- 124: Kondensator
- 125: Platine, vertikal
- 126: Leuchtdioden, LEDs
- 127: Gerätestecker
- 128: Aufsatzplatine
- 131: Hallsensor
- 132: Filmplatine, flexibel

## Patentansprüche

1. Greifvorrichtung mit Greifelemente (1, 2) tragenden Greifelementeträgern (91, 92),
- wobei die Greifelementeträger (91, 92) und mindestens ein elektrodynamisches Stellglied (110) in einem Gehäuse (10, 30) gelagert sind,
- wobei das oder die elektrodynamischen Stellglieder (110) über mindestens ein Getriebe (60, 80) auf mindestens einen beweglichen Greifelementeträger (91, 92) wirken, um das oder die Greifelemente (1, 2) zwischen einer Offen- und Schließstellung zu bewegen,
- wobei jedes Stellglied (110) in beide Schubrichtungen (8) elektrisch antreibbar ist, **dadurch gekennzeichnet, dass** der mindestens eine bewegliche Greifelementeträger (91, 92) in der Greif- und in der Geschlossenstellung der Greifelemente (1, 2) mittels Federkraft gehalten wird,
- wobei das Getriebe (60, 80) mindestens aus einem halben Kniehebelgetriebe (60) und einem nachgeordneten Hebelgetriebe (80) besteht,
- wobei der Kniehebel (73, 74) eines jeden halben Kniehebelgetriebes (60) zum einen an einer mittels des Stellglieds (110) antreibbaren Schiebekulisse (61, 62) und zum anderen an einer Pendelschwinge (81, 82) des Hebelgetriebes (80) gelagert ist,
- wobei die Schiebekulisse (61, 62) und die den jeweiligen Greifelementeträger (91, 92) antreibende Pendelschwinge (81, 82) gehäuseseitig gelagert sind,
- wobei der an der Schiebekulisse (61, 62) schwenkgelagerte Kniehebel (73, 74) quer zur Schubrichtung (8) der Schiebekulisse (61, 62) in einem Bereich von ± 40 Winkelgraden schwenkbar ist,
- wobei die Pendelschwinge (81, 82) um eine Parallele zur Schubrichtung (8) in einem Bereich von ± 20 Winkelgraden schwenkbar ist und
- wobei sich der Kniehebel (73, 74) in der Offen- oder Schließstellung der Greifelemente (1, 2) stabil jenseits seiner Strecklage befindet.

2. Vorrichtung gemäß Anspruch 1, **dadurch gekennzeichnet, dass** das elektrodynamische Stellglied (110) aus einer Tauchspule (115, 116) und einem Topfmagnet (111, 112, 113) besteht.

3. Vorrichtung gemäß Anspruch 1, **dadurch gekennzeichnet, dass** das oder die Stellglieder (110) mittel eines impulsartigen Stromstoßes angetrieben werden.

4. Vorrichtung gemäß Anspruch 1, **dadurch gekennzeichnet, dass** die Schwenkachsen des Kniehebels (73, 74) und der Pendelschwinge (81, 82) parallel zueinander angeordnet sind.

5. Vorrichtung gemäß Anspruch 1, **dadurch gekennzeichnet, dass** an der Schiebekulisse (61, 62) zwei halbe Kniehebelgetriebe (60) angelenkt sind, wobei die schiebekulissenseitige Schwenkachse (70) des linken Kniehebels (74) rechts der schiebekulissenseitige Schwenkachse (69) des rechten Kniehebels (73) angeordnet ist.

6. Vorrichtung gemäß Anspruch 1 oder 5, **dadurch gekennzeichnet, dass** sich der einzelne Kniehebel (73, 74) in der Offenstellung der Greifelemente (1, 2) stabil jenseits seiner Strecklage befindet.

7. Vorrichtung gemäß Anspruch 1, **dadurch gekennzeichnet, dass** der einzelne Greifelementeträger (91, 92) mittels eines Kulissensteines (105, 106) an der jeweiligen Pendelschwinge (81, 82) angelenkt ist.

## Claims

1. Gripper assembly comprising gripping element carriers (91, 92) supporting gripping elements (1, 2), with:
- gripping element carriers (91, 92) and at least one electrodynamic actuator (110) mounted in a housing (10, 30);
- with electrodynamic actuator(s) (110) acting onto at least one movable gripper element carrier (91, 92) through at least one transmission (60, 80) so as to move gripper element(s) (1, 2) between open and closed positions; and
- with each actuator (110) adapted to be driven electrically in either direction of thrust (8); **characterized in that**
- said at least one movable gripper element carrier (91, 92) are retained by spring force in its gripping and closed positions;
- said transmission (60, 80) comprises at least a one-half toggle lever transmission (60) and a succeeding lever-type linkage (80);
- the toggle lever (73, 74) of each toggle-lever-type transmission (60) is supported on a longitudinal slide member (61, 62) adapted to be driven by actuator (110), on the one hand, and on an oscillating link (81, 82) of linkage (80), on the other;
- slide member (61, 62) and the oscillating link (81, 82) driving each respective gripper element carrier (91, 92) are supported on the housing;
- the toggle lever (73, 74) pivotally mounted on slide member (61, 62) is pivotable within an angular range of ±40 degrees transversely of the direction of thrust (8) of slide member (61, 62);
- said oscillating link (81, 82) is pivotable within a range of ±20 degrees about a line parallel to the direction of thrust (8); and
- toggle lever (73, 74) is stably positioned beyond its stretched condition in the open or closed position of gripper elements (1, 2).

2. Assembly as claimed in claim 1, **characterized in that** electrodynamic actuator (110) comprises a plunger coil (115, 116) and a pot magnet (111, 112, 113).

3. Assembly as claimed in claim 1, **characterized in that** actuator(s) (110) is adapted to be driven by a pulse-like electrical current.

4. Assembly as claimed in claim 1, **characterized in that** the pivoting axes of toggle lever (73, 74) and oscillating link (81, 82) are in parallel with each other.

5. Assembly as claimed in claim 1, **characterized in that** slide member (61, 62) has a pair of one-half toggle lever transmissions (60) movably connected therewith , with the slide-side pivoting axis (70) of lefthand toggle lever (74) extending on the righthand side of the slide-side pivoting axis (69) of righthand toggle lever (73).

6. Assembly as claimed in claim 1 or 5; **characterized in that** each toggle lever (73, 74) is located stably beyond its stretched position in the open position of gripper elements (1, 2).

7. Assembly as claimed in claim 1, **characterized in that** each gripper element carrier (91, 92) is movably coupled to its respective oscillating link (81, 82) by means of a slide block (105, 106).

## Revendications

1. Dispositif de préhension équipé de supports (91, 92) qui portent des éléments de préhension (1, 2),
- les supports des éléments de préhension (91, 92) et au moins un organe de commande électrodynamique (110) étant logés dans un carter (19, 30),
- l'organe ou les organes de commande (110) agissant par l'intermédiaire d'au moins une transmission (60, 80) au moins sur un support mobile d'éléments de préhension (91, 92), afin de déplacer l'élément ou les éléments de préhension (1, 2) entre une position ouverte et une position fermée,
- chaque organe de commande (110) pouvant être entraîné électriquement dans les deux sens de poussée (8), **caractérisé en ce**
- **qu'**au moins un support des éléments de préhension (91, 92) est mobile et que ce support est maintenu dans la position de préhension et dans la position fermée des éléments de préhension (1, 2) par la force d'un ressort,
- la transmission (60, 80) étant composée au moins d'un demi-mécanisme à genouillère (60) et d'un mécanisme à levier (80) monté en aval,
- la genouillère (73, 74) de chaque demi-mécanisme à genouillère (60) étant placée d'une part à côté d'une coulisse (61, 62) qui peut être entraînée par l'organe de commande (110) et d'autre part à côté d'une bielle oscillante (81, 82) du mécanisme à levier (80),
- la coulisse (61, 62) et la bielle oscillante (81, 82) qui entraîne le support correspondant (91, 92) des éléments de préhension étant montées du côté du carter,
- la genouillère (73, 74) qui est installée de manière pivotante sur la coulisse (61, 62) pouvant pivoter transversalement au sens de poussée (8) de la coulisse (61, 62) dans une plage de ± 40 degrés angulaires,
- la bielle oscillante (81, 82) pouvant pivoter autour d'une parallèle par rapport au sens de poussée (8) dans une plage de ± 20 degrés angulaires et
- la genouillère (73, 74) est dans une position stable au-delà de sa position étirée, lorsque les éléments de préhension (1, 2) se trouvent en position ouverte ou fermée.

2. Dispositif selon la revendication 1, **caractérisé en ce que** l'organe de commande électromagnétique (110) est composé d'une bobine mobile (115, 116) et d'un électro-aimant cuirassé (111, 112, 113).

3. Dispositif selon la revendication 1, **caractérisé en ce que** l'organe ou les organes de commande (110) sont entraînés par une impulsion électrique.

4. Dispositif selon la revendication 1, **caractérisé en ce que** les axes de pivotement de la genouillère (73, 74) et les axes de la bielle oscillante sont disposés parallèlement.

5. Dispositif selon la revendication 1, **caractérisé en ce que** deux demi-mécanismes à genouillère (60) sont articulés sur la coulisse (61, 62), l'axe de pivotement (70) côté coulisse de la genouillère gauche (74) étant disposé du côté droit de l'axe de pivotement (69) côté coulisse de la genouillère droite (73).

6. Dispositif selon la revendication 1 ou 5, **caractérisé en ce que** chaque genouillère (73, 74) se trouve dans une position stable au-delà de sa position étirée, lorsque les éléments de préhension (1, 2) sont ouverts.

7. Dispositif selon la revendication 1, **caractérisé en ce que** chaque support des éléments de préhension (91, 92) est articulé sur la bielle oscillante correspondante (81, 82) au moyen d'un coulisseau (105, 106).
